# EUROPEAN PATENT SPECIFICATION

(11) **EP 4 318 895 B1**
(45) Date of publication and mention of the grant of the patent: **06.05.2026**
(21) Application number: 23189042.7
(22) Date of filing: 01.08.2023
(51) Int. Cl.: H02K 5/24, F16D 3/68, F16H 57/028, H02K 7/116, H02K 7/14

(54) **NOISE REDUCTION AND SHOCK ABSORPTION STRUCTURE FOR TUBULAR MOTOR**
GERÄUSCHMINDERUNGS- UND STOSSDÄMPFUNGSSTRUKTUR FÜR EINEN ROHRMOTOR
STRUCTURE DE RÉDUCTION DE BRUIT ET D'ABSORPTION DE CHOCS POUR MOTEUR TUBULAIRE

(30) Priority: 03.08.2022 CN 202222036353 U
(43) Date of publication of application: 07.02.2024
(73) Proprietor: Harda Intelligent Technologies Co., Ltd., Xiamen Fujian 361000 (CN)
(72) Inventor: PENG, KeSheng, 361000 Xiamen (CN)
(74) Representative: Cabinet Chaillot

(56) References cited:
- EP-A1- 2 466 730
- WO-A1-2013/181845
- WO-A2-2012/149067
- CN-C- 100 521 452
- US-A1- 2011 062 000

## Description

### BACKGROUND OF THE INVENTION

The present invention relates to the technical field of tubular motors, and in particular to a noise reduction and shock absorption structure for tubular motor.

A tubular motor consists of three main sections: stroke, motor, and deceleration, all working inside a circular tube. The stroke section controls the upper and lower limits of the motor, the motor section is responsible for motor rotation, while the deceleration section mostly uses planetary reduction to slow down the motor speed and increase output torque.

Tubular motors are mainly used for electric rolling doors, where the motor is hidden inside a rolling tube and is controlled by a remote controller. As the motor rotates, it drives a transmission shaft to rotate and thus roll up or down the curtain. When being rolled up, the curtain is wound on the rolling shaft; when being rolled down, the curtain slides down along an inner side of a guide rail.

However, high-speed rotation of the motor causes frequent shaking, which is transmitted to the motor casing. As a result, vibration and noise occur between the motor casing and the rolling shaft, thereby creating a bad user experience. A current solution is to provide a buffer piece between the motor and the motor casing to absorb the vibration. However, this only solves the problem of vibration transmission between the motor and the motor casing. In fact, to prevent the motor's output shaft from deviating during operation, an output bracket and a fixing seat are installed on two ends of the motor respectively to keep both ends of the motor relatively fixed with the motor casing. This means that there is a rigid connection between the two ends of the motor and the motor casing. However, this rigid connection is easily affected by the preciseness in the assembly of different components, and can also cause vibration. Therefore, the noise reduction effect of an existing tubular motor is still not ideal and cannot be used in situations that require silent operation.

CN100521452C discloses a sound attenuation and vibration absorption device for a tubular motor, comprising a front vibration absorption component and a back vibration absorption component connected at two ends of the tubular motor and a sealed tube equipped outside the front and the back vibration absorption components and the tubular motor. The back vibration absorption component is directly connected at one end of a housing of the tubular motor, the front vibration absorption component is connected with a front output vibration absorption seat on the other end of the housing of the tubular motor via an III-stage bracket, which is connected with an output shaft seat. The device equipped at two ends of the tubular motor changes the rigid connection and transmission of the tubular motor to elastic connection and transmission with flexible support, so as to reduce and eliminate mechanical noise due to mechanical vibration from the vibration source; and the sealed tube is sheathed outside the tubular motor to seal and isolate the tubular motor in the sealed tube, so as to completely seal the electromagnetic noise generated during operation of the tubular motor in the sealed tube.

WO2013181845A1 discloses a tubular motor, comprising a tubular cylinder having a through-cavity and a motor body arranged in the through-cavity of the tubular cylinder, wherein a connecting seat is provided in the front end of the motor body; a bearing seat is provided in the front end of the through-cavity and a fixing seat is provided in the rear end thereof; the connecting seat and the bearing seat, and the rear end of the motor body and the fixing seat are connected via a vibration absorberrespectively; and at least one layer of an elastic element for supporting the motor body is provided in the vibration absorber. There is no rigid contact between the body of the tubular motor and the inner wall of the tubular cylinder so as to be able to absorb vibration and reduce noise.

US2011062000A1 discloses a motorized conveyor roller that prevents slip between a power transmission mechanism in a roller tube and the roller tube due to aging. The power transmission mechanism includes a first closed-bottom cylindrical member fit over a second closed-bottom cylindrical member and a bolt for axially pressing the members against one another. The first member receives torque from a motor and a double-sided tape is laid on an outer surface of the first member. Facing surfaces of the first and second members are tapered, and the circumferential wall with the double-sided tape is expandable diametrically. The bolt diametrically expands the circumferential wall pressed by the tapered surface. Thus, an adhesive force of the double-sided tape sandwiched between the circumferential wall and the roller tube is exerted to adhere the outer surface of the first member to an inner surface of a roller tube.

EP2466730A1 discloses a gearless roller drive having a transverse flux motor that is equipped with an internal stator and an outer rotor. Several permanent magnets are circumferentially arranged one behind the other. The transverse flux unit and an electric control unit are axially arranged one behind the other. The dimensions of the electric control unit radially along axis of the stator, are not more than the rotor diameter. The electrical terminal conductors are connected with the control unit through plug connectors.

WO2012149067A2 discloses a quiet integrated cylindrical motor system designed to provide an ultra-quiet motorization solution for interior and exterior window shadings and projector screens. The motor system rotates an output drive hub that in turn rotates a roller mechanism in a forward or reverse direction. The cylindrically shaped motor system sits within the outer roller mechanism that rotates in a forward or reverse direction, thereby, raising or lowering a reelable shade or screen. The quiet integrated cylindrical motor system is designed to reduce the emission of sound and vibration from the motor and gear assembly, by utilizing a combination of the following: primary and secondary vibration suppression motor mounts, a sound suppression motor sleeve and a vibration reduction driveshaft/actuator.

### BRIEF SUMMARY OF THE INVENTION

The present invention aims to provide a noise reduction and shock absorption structure for a tubular motor, which solves the problems existing in the prior art and achieves better noise reduction and shock absorption effects, thus improving the quality of the tubular motor.

In order to achieve the above objects, the present invention adopts the following technical solutions:
A noise reduction and shock absorption structure for a tubular motor, comprising a motor casing, a motor body, an output support, an output shaft, a fixing seat, a first damping assembly, and a second damping assembly;
the motor body is provided inside the motor casing; a front end of the motor body is connected to a transmission shaft to transmit motions;
the output support is embedded at a front end of the motor casing;
the output shaft is rotatable and passes through the output support;
the fixing seat is embedded within the motor casing;
the first damping assembly is provided between the transmission shaft and the output shaft;
the second damping assembly is provided between a rear end of the motor body and the fixing seat;
the first damping assembly comprises a first connecter and a second connecter both made of metals or high-strength plastics, and a first buffer piece and a second buffer piece both made of rubber or silicone; the transmission shaft, the first connecter, the second connecter, and the output shaft are connected coaxially in sequence;
a circumferential surface of the transmission shaft is sleeved by the first buffer piece; an input end of the first connecter sleeves the first buffer piece, and the second buffer piece sleeves a circumferential surface and an end surface of an output end of the first connecter; the second connecter sleeves the second buffer piece;the second damping assembly comprises a third connecter and a fourth connecter both made of metals or high-strength plastics, and a third buffer piece and a fourth buffer piece both made of rubber or silicone; the rear end of the motor body, the third connecter, the fourth connecter, and the fixing seat are connected coaxially in sequence;
the third buffer piece sleeves on a spline head between the third connecter and the fourth connecter, a fourth buffer piece sleeves on a spline head between the fourth connecter and the fixing seat;an input end of the first connecter is a first spline hole, and a circumferential surface of the transmission shaft is sleeved by a fifth connecter made of a metals or high-strength plastics; an outer shape of the first buffer piece matches with a shape of the first spline hole; an outer shape of the fifth connecter matches with a shape of an inner cavity of the first buffer piece, and an inner cavity of the fifth connecter matches with a shape of the transmission shaft.

Preferably, an output end of the first connecter is a first spline head, and a first spline groove corresponding to the first spline head is formed on the second buffer piece.

Preferably, an end surface of the second connecter facing towards the first connecter is recessed to form a second spline groove; an end of the second spline groove away from the first connecter is stepped to form a through hole in communication with the second spline groove for the output shaft to pass through; a limiting plate is provided at an end of the output shaft to abut against an end surface of the second buffer piece; first limiting grooves on which the limiting plate is slidable along an axial direction of the second spline groove are formed on side walls of the second spline groove; the first limiting grooves extend to the end of the second spline groove away from the first connecter.

Preferably, a length of the first spline groove is greater than a length of the first spline head.

Preferably, a shaft rotation hole is formed in the output support extending along an axis of the output support; the output shaft passes through the shaft rotation hole and is rotatable inside the shaft rotation hole; a plurality of damping rings are provided between a circumferential surface of the output shaft and an inner wall of the shaft rotation hole.

Preferably, a speed reduction device is provided on an output end of the motor body; an input end of the speed reduction device is connected with a rotating shaft of the motor body to achieve motion transmission; an output end of the speed reduction device is connected with the transmission shaft to achieve motion transmission.

Preferably, a plurality of first limiting plates are provided around a peripheral edge of an end surface of the rear end of the motor body; second limiting grooves corresponding to the first limiting plates are formed circumferentially around an end portion of the third connecter facing towards the motor body; the first limiting plates are inserted into the second limiting grooves respectively.

Preferably, said spline head between the third connecter and the fourth connecter is a second spline head provided at one end of the third connecter facing towards the fourth connecter; a second spline hole is formed at one end of the third buffer piece facing towards the third connecter, and a third spline head is provided at another end of the third buffer piece facing towards the fourth connecter; and the second spline hole extends through an end surface of the third spline head; a third spline hole is formed at one end of the fourth connecter facing towards the third connecter; the second spline head is sleeved by the second spline hole, and the third spline head is sleeved by the third spline hole.

Preferably, a first stepped platform is provided on a circumferential surface of the third buffer piece, the third spline head protrudes from an end surface of the first stepped platform, and an end surface of the fourth connecter abuts against the first stepped platform.

Preferably, a plurality of second limiting plates are provided on a circumferential surface of the third connecter; third limiting grooves corresponding to the second limiting plates are formed on an end surface of the third buffer piece facing towards the third connecter; the second limiting plates are inserted into the third limiting grooves respectively.

Preferably, said spline head between the fourth connecter and the fixing seat is a fourth spline head provided at one end of the fourth connecter facing towards the fixing seat; a fourth spline hole and a fifth spline head are provided at two ends of the fourth buffer piece respectively; the fourth spline hole extends through an end surface of the fifth spline head; a fifth spline hole is formed at one end of the fixing seat facing towards the fourth connecter; the fourth spline head is sleeved by the fourth spline hole, and the fifth spline head is sleeved by the fifth spline hole.

Preferably, a second stepped platform is provided on a circumferential surface of the fourth connecter, and the fourth spline head protrudes from an end surface of the second stepped platform; a third stepped platform is provided on a circumferential surface of the fourth buffer piece, and the fifth spline head protrudes from an end surface of the third stepped platform; an end surface of the fourth buffer piece abuts against the second stepped platform, and an end surface of the fixing seat abuts against the third stepped platform.

Preferably, a circumferential surface of the fixing seat is sleeved with a first damping sleeve, and the first damping sleeve is elastically fitted between the fixing seat and the inner wall of the motor casing.

Preferably, a third damping assembly is provided between a circumferential surface of the motor body and the inner wall of the motor casing; the third damping assembly comprises a sealing tube sleeving around the circumferential surface of the motor body, and a plurality of second damping sleeves sleeving around a circumferential surface of the sealing tube; the second damping sleeves are elastically fitted between the circumferential surface of the sealing tube and the inner wall of the motor casing.

Preferably, fourth limiting grooves accommodating the second damping sleeves respectively are formed on the circumferential surface of the sealing tube.

Preferably, a plurality of stripes oriented along the axial direction of the tubular motor are formed on a circumferential surface of each of the second damping sleeves, and the stripes are formed as protrusions or recesses on the circumferential surface of each of the second damping sleeves.

After the above technical solutions are adopted, the present invention has the following technical effects:
(1) The present invention achieves cushioning and vibration damping effects by providing a first damping assembly between the transmission shaft and the output shaft at the front end of the motor body, and a second damping assembly between the rear end of the motor body and the fixing seat. Both the first damping assembly and the second damping assembly are three-stage buffering connection structures. These structures are applied at both ends of the motor body to provide cushioning and vibration damping effects during progressive power and motion transmission process and the process of components fixation and connection.
(2) Compared to the traditional structure where there are rigid connections and motion transmissions between the motor body, the output support, and the fixing seat, the three-stage buffering connection structures that provide elastic connection and motion transmission can effectively reduce or even eliminate vibrations at each stage of connection and motion transmission, preventing noise, thereby enhancing the noise reduction and vibration damping effect between the input end of the tubular motor and the motor casing. As a result, the quality of the tubular motor is improved and thus it can be used in scenarios where silent operation is required.

### BRIEF DESCRIPTION OF THE DRAWINGS

FIG. 1 is a perspective view of the overall specific embodiment according to the present invention;
FIG. 2 is an exploded view of the overall specific embodiment according to the present invention;
FIG. 3 is an exploded view of the motor part of the specific embodiment according to the present invention;
FIG. 4 is a perspective view of the fixing seat of the specific embodiment according to the present invention;
FIG. 5 is exploded view I of the first damping assembly, the output support, and the output shaft of the specific embodiment according to the present invention;
FIG. 6 is exploded view II of the first damping assembly, the output support, and the output shaft of the specific embodiment according to the present invention;
FIG. 7 is exploded view I of the second damping assembly of the specific embodiment according to the present invention;
FIG. 8 is exploded view II of the second damping assembly of the specific embodiment according to the present invention;
FIG. 9 is a cross-sectional view of the overall specific embodiment according to the present invention;
FIG. 10 is an enlarged view of portion A in FIG. 9; and
FIG. 11 is an enlarged view of portion B in FIG. 9.

### DETAILED DESCRIPTION OF THE INVENTION

In order to further explain the technical solutions of the present invention, the present invention will be explained in detail by specific embodiments.

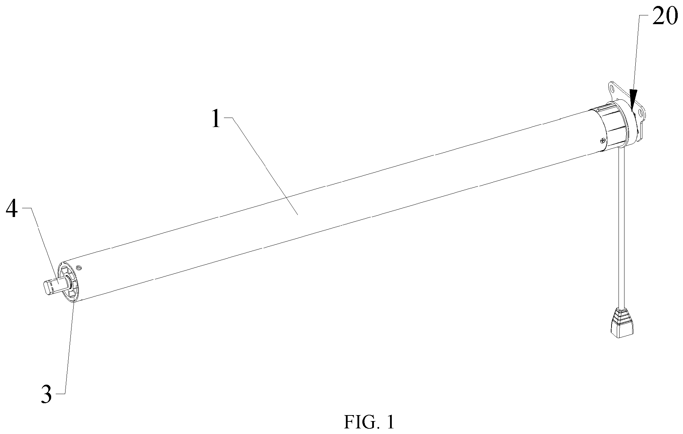

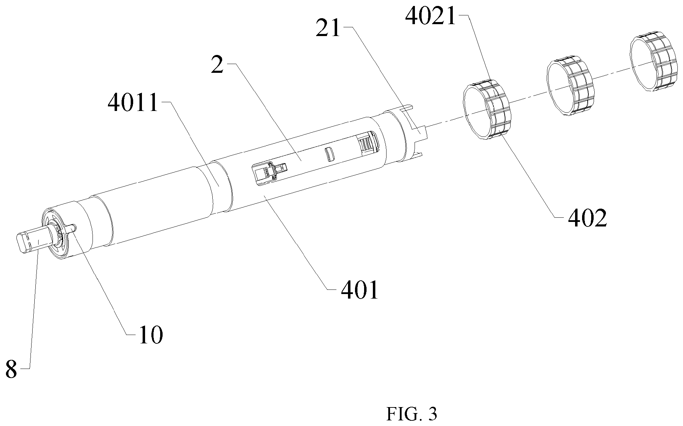

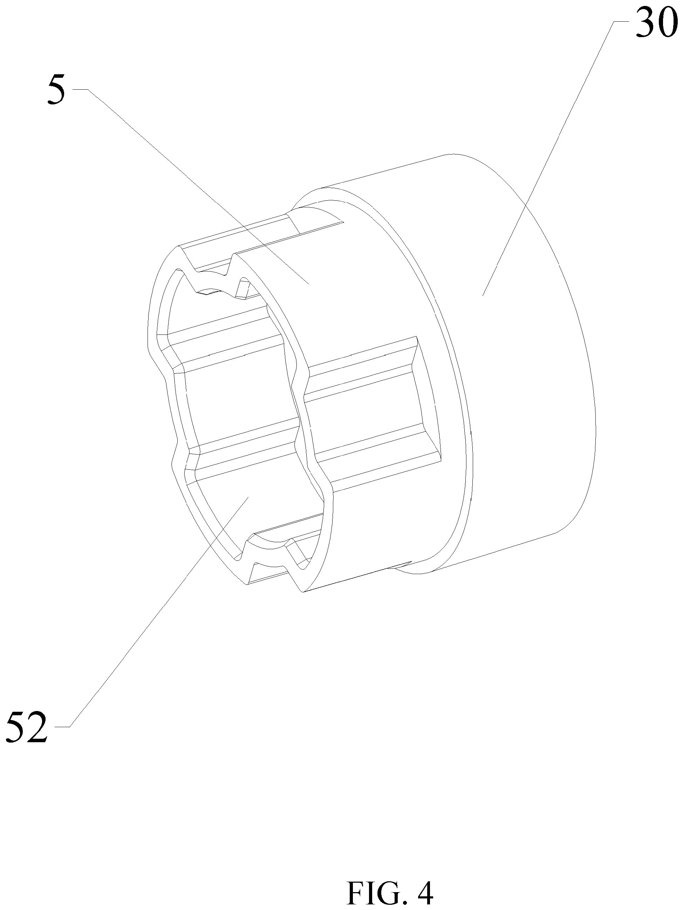

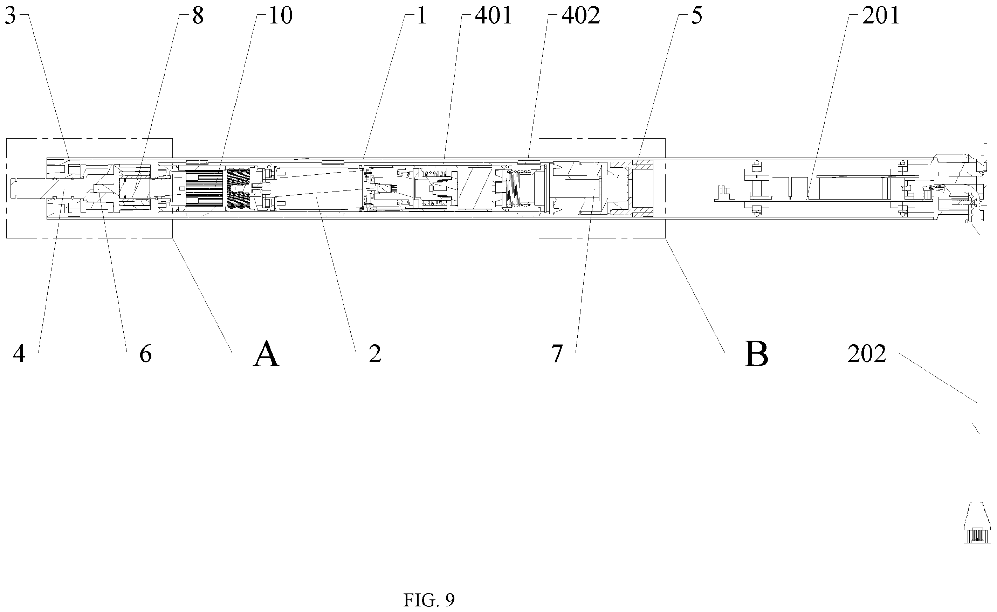

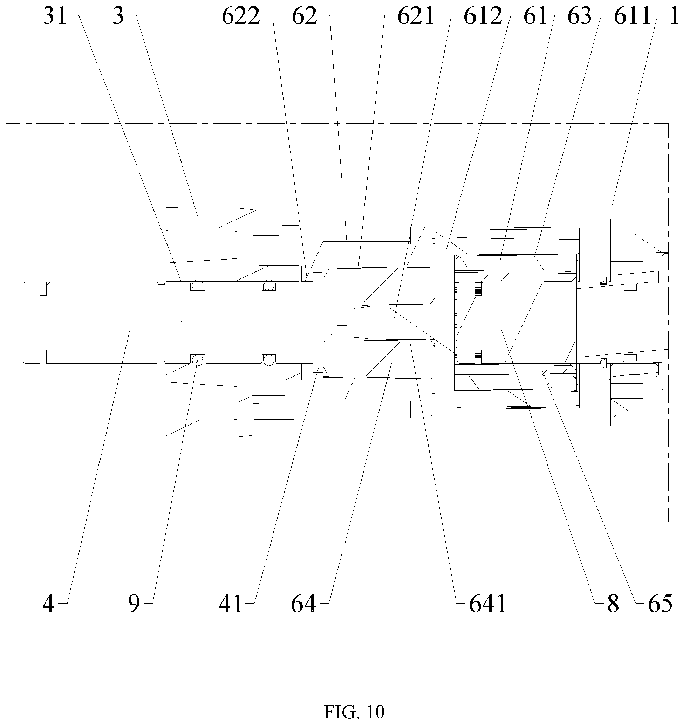

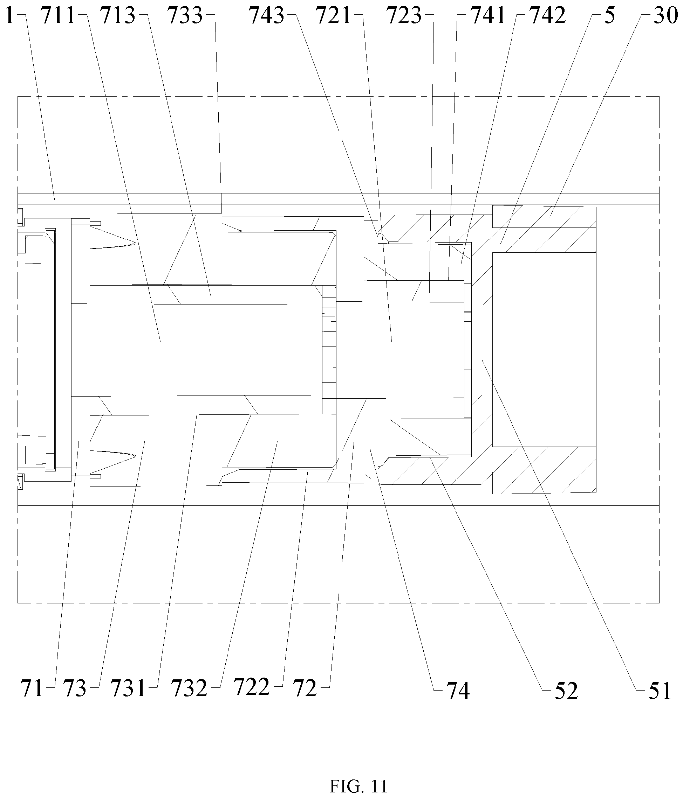

Referring to FIGs. 1 to 11, the present invention discloses a noise reduction and shock absorption structure for a tubular motor, which comprises a motor casing 1, a motor body 2, an output support 3, an output shaft 4, a fixing seat 5, a first damping assembly 6, and a second damping assembly 7;
the motor body 2 is provided inside the motor casing 1; a front end of the motor body 2 is connected to a transmission shaft 8 to transmit motions;
the output support 3 is embedded at a front end of the motor casing 1;
the output shaft 4 is rotatable and passes through the output support 3, and is configured to connect external devices driven by the tubular motor, such as a rolling shaft of a rolling door;
the fixing seat 5 is embedded within the motor casing 1 and is positioned proximal to a rear end of the motor casing 1;
the first damping assembly 6 is provided between the transmission shaft 8 and the output shaft 4; the second damping assembly 7 is provided between a rear end of the motor body 2 and the fixing seat 5;
the first damping assembly 6 comprises a first connecter 61 and a second connecter 62 both made of hard materials, and a first buffer piece 63 and a second buffer piece 64 both made of soft materials; the transmission shaft 8, the first connecter 61, the second connecter 62, and the output shaft 4 are connected coaxially in sequence to enable power transmission from the motor body 2 to the output shaft 4; the first buffer piece 63 is provided at a connecting portion between the transmission shaft 8 and the first connecter 61, and the second buffer piece 64 is provided at a connecting portion between the first connecter 61 and the second connecter 62, thus providing soft connections as well as cushioning and vibration damping effects;
the second damping assembly 7 comprises a third connecter 71 and a fourth connecter 72 both made of hard materials, and a third buffer piece 73 and a fourth buffer piece 74 both made of soft materials; the rear end of the motor body 2, the third connecter 71, the fourth connecter 72, and the fixing seat 5 are connected coaxially in sequence to achieve an indirect coaxial connection between the motor body 2 and the fixing seat 5, thereby preventing the motor body 2 from angular displacement after being installed inside the motor casing 1; the third buffer piece 73 and the fourth buffer piece 74 are provided at a connecting portion between the third connecter 71 and the fourth connecter 72 and at a connecting portion between the fourth connecter 72 and the fixing seat 5 respectively, thereby preventing direct contact between the third connecter 71 and the fourth connecter 72 and between the fourth connecter 72 and the fixing seat 5.

Specific embodiments of the present invention are described below.

The above-mentioned hard materials are materials that are hard and not easy to deform, such as metals and high-strength plastics. Said high-strength plastics can be PA66+33%GF (a composite material of nylon 66 and glass fiber, which is an existing material); the above-mentioned soft materials are elastic materials able to provide buffering effect, such as rubber and silicone, and a specific example of soft materials is TPV45° (thermoplastic vulcanizate with a shore hardness of 45, which is an existing material). In the present embodiment, the third connecter 71 and the third buffer piece 73, as well as the fourth buffer piece 74 and the fixing seat 5, are in each case formed integrally as a whole by using overmolding technique in order to enhance the connection strength, reduce components required during assembly, and increase assembly efficiency.

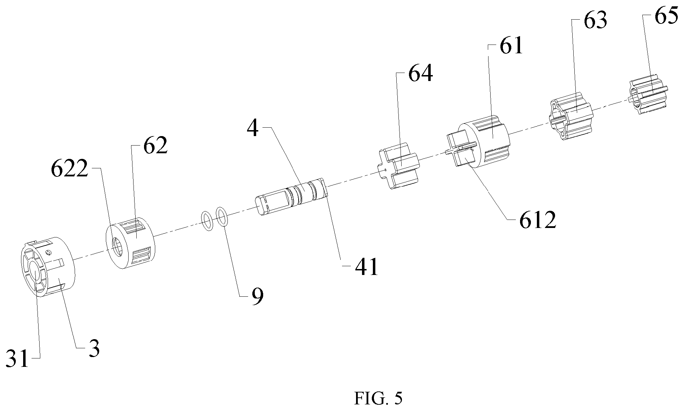

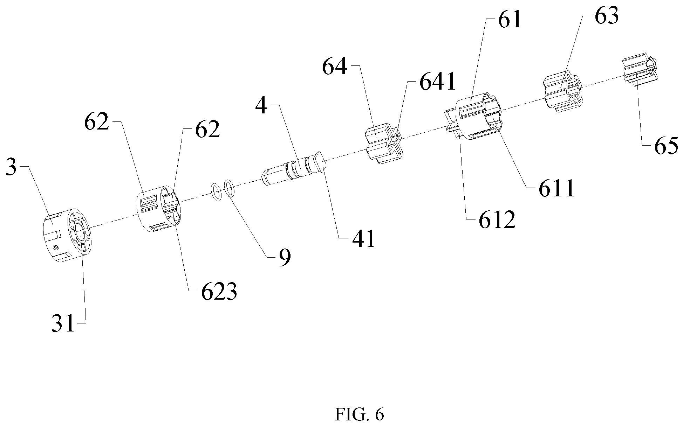

Referring to FIGs. 5 and 6, the aforementioned transmission shaft 8, the first connecter 61, the second connecter 62, and the output shaft 4 are connected coaxially using spline connection. Specifically, a circumferential surface of the transmission shaft 8 is sleeved by the first buffer piece 63; an input end of the first connecter 61 sleeves the first buffer piece 63; the second buffer piece 64 sleeves a circumferential surface and an end surface of an output end of the first connecter 61; the second connecter 62 sleeves the second buffer piece 64, and an end of the output shaft 4 abuts against an end surface of the second buffer piece 64.

In some embodiments of the aforementioned first damping assembly 6, the input end of the first connecter 61 is a first spline hole 611, and the circumferential surface of the transmission shaft 8 is sleeved by a fifth connecter 65 made of a hard material; an outer shape of the first buffer piece 63 matches with a shape of the first spline hole 611; an outer shape of the fifth connecter 65 matches with a shape of an inner cavity of the first buffer piece 63, and an inner cavity of the fifth connecter matches with a shape of the transmission shaft 8. Since the transmission shaft 8 is generally in a regular shape, such as a cross section of a running track in an athletics field (i.e. two arcs at top and bottom, connected by two vertical edges at left and right), the additional arrangement of the fifth connecter 65 allows for adaptation of the transmission shaft 8 to the first buffer piece 63 which is in a different shape, thus fulfilling the requirements for spline connection.

In some embodiments of the aforementioned first damping assembly 6, the output end of the first connecter 61 is a first spline head 612, and a first spline groove 641corresponding to the first spline head 612 is formed on the second buffer piece 64. In this embodiment, a cross section of the first spline head 612 has a cross shape.

Furthermore, an end surface of the second connecter 62 facing towards the first connecter 61 is recessed to form a second spline groove 621; an end of the second spline groove 621 away from the first connecter 61 is stepped to form a through hole 622 in communication with the second spline groove 621 for the output shaft 4 to pass through; a limiting plate 41 is provided at the end of the output shaft 4 abutting against the end surface of the second buffer piece 64; first limiting grooves 623 for the limiting plate 41 to slide along an axial direction of the second spline groove 621 are formed on side walls of the second spline groove 621; the first limiting grooves 623 extend to the end of the second spline groove 621 away from the first connecter 61, thereby allowing the assembly of the output shaft 4 in the second connecter 62. During assembly, the output shaft 4 is first inserted into the second spline groove 621 from the end of the second connecter 62 facing towards the first connecter 61, and during insertion of the output shaft 4, the limiting plate 41 slides on the first limiting grooves 623, then the output shaft 4 passes through the through hole 622, and the limiting plate 41 comes into contact with a stepped portion at the end of the second spline groove 621 away from the first connecter 61; next, the first spline head 612 sleeved with the second buffer piece 64 is inserted into the second spline hole 621 and abuts against the limiting plate 41, thereby achieving sequential key-joint connections between the first connecter 61, the second connecter 62, and the output shaft 4.

Meanwhile, a length of the first spline groove 641 is greater than a length of the first spline head 612, allowing a gap to be formed between the first spline head 612 and a bottom wall of the first spline groove 641after the first spline head 612 is inserted into the first spline groove 641. During assembly, the first spline head 612 cannot abut against the bottom wall of the first spline groove 641, so that more space is given for deformation at an end of the second buffer piece 64 abutting against the output shaft 4 to achieve better vibration damping effects. Also, the gap between the first spline head 612 and the bottom wall of the first spline groove 641 contains air which dampens transmission of noise, thereby achieving the purpose of noise reduction.

A shaft rotation hole 31 is formed extending along an axis of the output support 3; the output shaft 4 passes through the shaft rotation hole 31 and is rotatable inside the shaft rotation hole 31; a plurality of damping rings 9 are provided between a circumferential surface of the output shaft 4 and an inner wall of the shaft rotation hole 31. The damping rings 9 are elastically fitted between the output shaft 4 and the output support 3, thereby preventing complete rigid contact between the output shaft 4 and the output support 3. This reduces the impact on the output support 3 when the output shaft 4 rotates, thereby reducing the noise generated by the product.

A speed reduction device 10 is provided on an output end of the motor body 2; an input end of the speed reduction device 10 is connected with a rotating shaft of the motor body 2 to achieve motion transmission; an output end of the speed reduction device 10 is connected with the transmission shaft 8 to achieve motion transmission, thus enabling the transmission shaft 8 to connect to the motor body 2 through the speed reduction device 10. This arrangement achieves a reduction in speed from the motor body 2 to the transmission shaft 8, increases torque, and better accommodates the typical usage requirements of a tubular motor. In this embodiment, the speed reduction device 10 is a planetary gearbox, which provides smooth transmission, high load-bearing capacity, and a large transmission ratio within a compact space, making it suitable for tubular motor having also a small size.

The rear end of the motor body 2 is an input end of the motor body 2, and the input end is an end that connects to an electrical component assembly 20 of the tubular motor. The electrical component assembly 20 herein comprises electrical components which supply power and provide control to the motor body 2, such as a circuit board 201 and a power cord 202. This is a conventional technique and will not be further elaborated here. A first wire passage hole 51, a second wire passage hole 711, and a third wire passage hole 721, through which wires are arranged to connect the circuit board 201 with the motor body 2, are formed on the fixing seat 5, the third connecter 71, and the fourth connecter 72 respectively.

A plurality of first limiting plates 21 are provided around a peripheral edge of an end surface of the rear end of the motor body 2; second limiting grooves 712 corresponding to the first limiting plates 21 are formed circumferentially around an end portion of the third connecter 71 facing towards the motor body 2; the first limiting plates 21 are inserted into the second limiting grooves 712 respectively to achieve coaxial connection between the motor body 2 and the third connecter 71. In this embodiment, the first limiting plates 21 extend out of the motor body 2 and along an axial direction of the motor body 2 and surround an axis of the motor body 2 and spaced apart from one another by equal intervals.

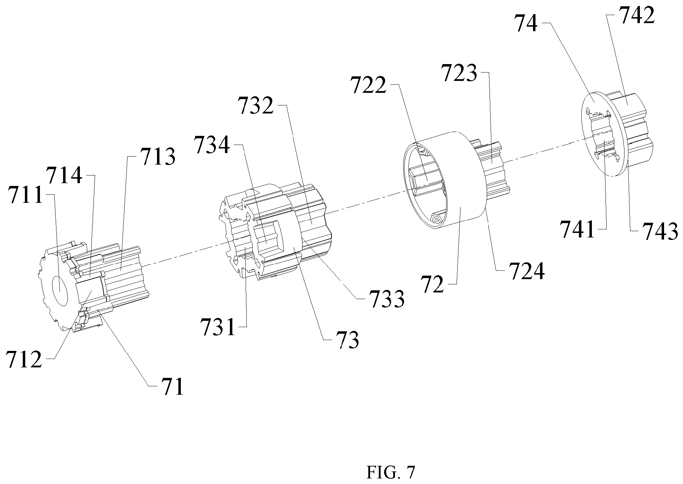

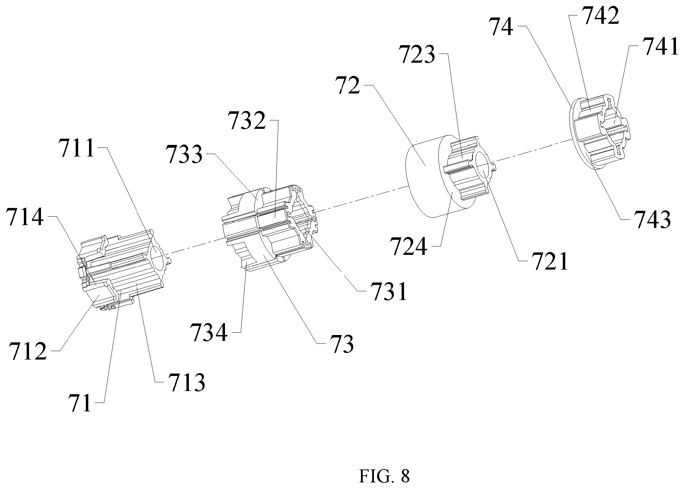

Referring to FIGs. 7 and 8, the third connecter 71 and the fourth connecter 72, as well as the fourth connecter 72 and the fixing seat 5, are in each case connected coaxially by spline connection. Therefore, the third buffer piece 73 sleeves on a spline head between the third connecter 71 and the fourth connecter 72, and a fourth buffer piece 74 sleeves on a spline head between the fourth connecter 72 and the fixing seat 5.

In some embodiments of the second damping assembly 7, a second spline head 713 is provided at one end of the third connecter 71 facing towards the fourth connecter 72; the second wire passage hole 711 extends through an end surface of the second spline head 713; a second spline hole 731 is formed at one end of the third buffer piece 73 facing towards the third connecter 71, and a third spline head 732 is provided at another end of the third buffer piece 73 facing towards the fourth connecter 72; and the second spline hole 731 extends through an end surface of the third spline head 732; a third spline hole 722 is formed at one end of the fourth connecter 72 facing towards the third connecter 71; the second spline head 713 is sleeved by the second spline hole 731, and the third spline head 732 is sleeved by the third spline hole 722.

Furthermore, a first stepped platform 733 is provided on the circumferential surface of the third buffer piece 73, the third spline head 732 protrudes from an end surface of the first stepped platform 733, and an end surface of the fourth connecter 72 abuts against the first stepped platform 733, thereby avoiding direct contact between the fourth connecter 72 and the third connecter 71, and therefore preventing rigid contact between the fourth connecter and the third connecter, which are both made of a hard materials. This effectively reduces vibration transmission and noise.

Further, a plurality of second limiting plates 714 are provided on a circumferential surface of the third connecter 71; third limiting grooves 734 corresponding to the second limiting plates 714 are formed on an end surface of the third buffer piece 73 facing towards the third connecter 71; the second limiting plates 714 are inserted into the third limiting grooves 734 respectively, thereby achieving position limiting effect between the third connecter 71 and the third buffer piece 73 both axially and circumferentially, and this can further enhance the coaxial connection strength between the third connecter 71 and the third buffer piece 73, and can also limit a depth which the second spline head 713 is inserted into the third buffer piece 73, and thus prevent rigid contact between the third connecter 71 and the fourth connecter 72. In this embodiment, the second limiting plates 714 extend along an outer side surface of the third connecter 71 in accordance with an axial direction of the third connecter 71, and surround an axis of the third connecter 71 and spaced apart from one another by equal intervals. Also, the second limiting grooves 712 are provided on outer side surfaces of the second limiting plates 714 respectively.

In some embodiments of the second damping assembly 7, a fourth spline head 723 is provided at one end of the fourth connecter 72 facing towards the fixing seat 5, and the third wire passage hole 721 extends through an end surface of the fourth spline head 723; a fourth spline hole 741 and a fifth spline head 742 are provided at two ends of the fourth buffer piece 74 respectively; the fourth spline hole 741 extends through an end surface of the fifth spline head 742; a fifth spline hole 52 is formed at one end of the fixing seat 5 facing towards the fourth connecter 72; the fourth spline head 723 is sleeved by the fourth spline hole 741, and the fifth spline head 742 is sleeved by the fifth spline hole 52.

Furthermore, a second stepped platform 724 is provided on a circumferential surface of the fourth connecter 72, and the fourth spline head 723 protrudes from an end surface of the second stepped platform 724; a third stepped platform 743 is provided on a circumferential surface of the fourth buffer piece 74, and the fifth spline head 742 protrudes from an end surface of the third stepped platform 743; an end surface of the fourth buffer piece 74 abuts against the second stepped platform 724, and an end surface of the fixing seat 5 abuts against the third stepped platform 743, thus avoiding direct contact between the fixing seat 5 and the fourth connecter 72, and therefore preventing rigid contact between the fixing seat and the fourth connecter, which are both made of a hard material. This effectively reduces vibration transmission and noise.

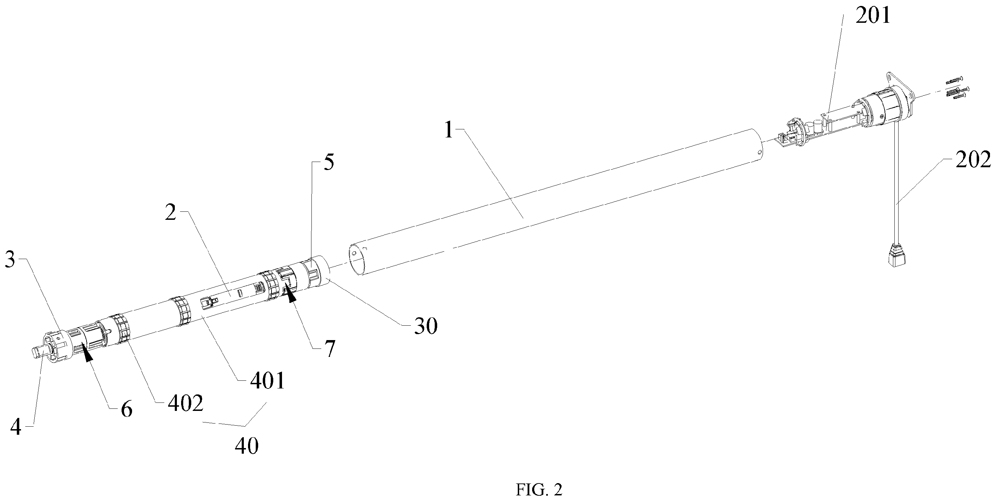

Referring to FIGs. 2, 4, and 11, a circumferential surface of the fixing seat 5 is sleeved with a first damping sleeve 30, and the first damping sleeve 30 is elastically fitted between the fixing seat 5 and the inner wall of the motor casing 1 to provide cushioning and vibration damping effects between the fixing seat 5 and the motor casing 1. Meanwhile, the frictional force between the first damping sleeve 30 and the fixing seat 5/motor casing 1 is utilized to stop rotation of the fixing seat 5 with respect to the inner wall of the motor casing 1, thereby achieving the purpose of securely fitting the fixing seat 5 within the motor casing 1.

A third damping assembly 40 is provided between a circumferential surface of the motor body 2 and the inner wall of the motor casing 1; the third damping assembly 40 comprises a sealing tube 401 sleeving around the circumferential surface of the motor body 2. This ensures that the noise generated during operation of the motor body 2 is contained within the sealing tube 401, thereby effectively reducing the noise.

Furthermore, the third damping assembly 40 further comprises a plurality of second damping sleeves 402 sleeving around a circumferential surface of the sealing tube 401; the second damping sleeves 402 are elastically fitted between the circumferential surface of the sealing tube 401 and the inner wall of the motor casing 1 and are configured to absorb the vibrations generated by the motor body 2 during operation, thereby preventing the motor body 2 from impacting (colliding) with the motor casing 1 and generating noise.

Next, fourth limiting grooves 4011 accommodating the second damping sleeves 402 respectively are formed on the circumferential surface of the sealing tube 401 and are configured to limit the installation positions of the second damping sleeves 402, thereby preventing any displacement of the second damping sleeves 402 caused by the vibrations generated during operation of the motor body 2 and ensuring the working stability of the second damping sleeves 402.

Moreover, a plurality of stripes 4021 oriented along the axial direction of the tubular motor are formed on the circumferential surface of each of the second damping sleeves 402, and the stripes 4021 are formed as protrusions or recesses on the circumferential surface of each of the second damping sleeves 402. Therefore, gaps in communication with an interior of the motor casing 1 are formed between each of the second damping sleeves 402 and the inner wall of the motor casing 1, and this can prevent the second damping sleeves 402 from being entirely attached to and in contact with the inner wall of the motor casing 1. As such, air inside the gaps can be utilized to reduce or eliminate noise.

Through the above solution, the present invention achieves cushioning and vibration damping effects by providing a first damping assembly 6 between the transmission shaft 8 and the output shaft 4 at the front end of the motor body 2 and a second damping assembly 7 between the rear end of the motor body 2 and the fixing seat 5. Both the first damping assembly 6 and the second damping assembly 7 are three-stage buffering connection structures. These structures are applied at both ends of the motor body 2 to provide cushioning and vibration damping effects during progressive power and motion transmission process and the process of components fixation and connection. Compared to the traditional structure where there are rigid connections and motion transmissions between the motor body 2, the output support 3, and the fixing seat 5, the three-stage buffering connection structures that provide elastic connection and motion transmission can effectively reduce or even eliminate vibrations at each stage of connection and motion transmission, preventing noise, thereby enhancing the noise reduction and vibration damping effect between the input end of the tubular motor and the motor casing. As a result, the quality of the tubular motor is improved and thus it can be used in scenarios where silent operation is required.

## Claims

1. A noise reduction and shock absorption structure for a tubular motor, comprising a motor casing (1), a motor body (2), an output support (3), an output shaft (4), a fixing seat (5), a first damping assembly (6), and a second damping assembly (7);
the motor body (2) is provided inside the motor casing (1); a front end of the motor body (2) is connected to a transmission shaft (8) to transmit motions;
the output support (3) is embedded at a front end of the motor casing (1);
the output shaft (4) is rotatable and passes through the output support (3);
the fixing seat (5) is embedded within the motor casing (1);
the first damping assembly (6) is provided between the transmission shaft (8) and the output shaft (4); the second damping assembly (7) is provided between a rear end of the motor body (2) and the fixing seat (5);
the first damping assembly (6) comprises a first connecter (61) and a second connecter (62) both made of metals or high-strength plastics, and a first buffer piece (63) and a second buffer piece (64) both made of rubber or silicone; the transmission shaft (8), the first connecter (61), the second connecter (62), and the output shaft (4) are connected coaxially in sequence; a circumferential surface of the transmission shaft (8) is sleeved by the first buffer piece (63); an input end of the first connecter (61) sleeves the first buffer piece (63), the second buffer piece (64) sleeves a circumferential surface and an end surface of an output end of the first connecter (61); the second connecter (62) sleeves the second buffer piece (64);
the second damping assembly (7) comprises a third connecter (71) and a fourth connecter (72) both made of metals or high-strength plastics, and a third buffer piece (73) and a fourth buffer piece (74) both made of rubber or silicone; the rear end of the motor body (2), the third connecter (71), the fourth connecter (72), and the fixing seat (5) are connected coaxially in sequence;
the third buffer piece (73) sleeves on a spline head between the third connecter (71) and the fourth connecter (72), a fourth buffer piece (74) sleeves on a spline head between the fourth connecter (72) and the fixing seat (5);
an input end of the first connecter (61) is a first spline hole (611), and the circumferential surface of the transmission shaft (8) is sleeved by a fifth connecter (65) made of metals or high-strength plastics; an outer shape of the first buffer piece (63) matches with a shape of the first spline hole (611); an outer shape of the fifth connecter (65) matches with a shape of an inner cavity of the first buffer piece (63), and an inner cavity of the fifth connecter (65) matches with a shape of the transmission shaft (8).

2. The noise reduction and shock absorption structure of claim 1, wherein an output end of the first connecter (61) is a first spline head (612), and a first spline groove (641) corresponding to the first spline head (612) is formed on the second buffer piece (64).

3. The noise reduction and shock absorption structure of claim 2, wherein an end surface of the second connecter (62) facing towards the first connecter (61) is recessed to form a second spline groove (621); an end of the second spline groove (621) away from the first connecter (61) is stepped to form a through hole (622) in communication with the second spline groove (621) for the output shaft (4) to pass through; a limiting plate (41) is provided at an end of the output shaft (4) to abut against an end surface of the second buffer piece (64); first limiting grooves (623) on which the limiting plate (41) is slidable along an axial direction of the second spline groove (621) are formed on side walls of the second spline groove (621); the first limiting grooves (623) extend to the end of the second spline groove (621) away from the first connecter (61).

4. The noise reduction and shock absorption structure of claim 2, wherein a length of the first spline groove (641) is greater than a length of the first spline head (612).

5. The noise reduction and shock absorption structure of claim 1, wherein a shaft rotation hole (31) is formed in the output support extending along an axis of the output support (3); the output shaft (4) passes through the shaft rotation hole (31) and is rotatable inside the shaft rotation hole (31); a plurality of damping rings (9) are provided between a circumferential surface of the output shaft (4) and an inner wall of the shaft rotation hole (31).

6. The noise reduction and shock absorption structure of claim 1, wherein a speed reduction device (10) is provided on an output end of the motor body (2); an input end of the speed reduction device (10) is connected with a rotating shaft of the motor body (2) to achieve motion transmission; an output end of the speed reduction device (10) is connected with the transmission shaft (8) to achieve motion transmission.

7. The noise reduction and shock absorption structure of claim 1, wherein a plurality of first limiting plates (21) are provided around a peripheral edge of an end surface of the rear end of the motor body (2); second limiting grooves (712) corresponding to the first limiting plates (21) are formed circumferentially around an end portion of the third connecter (71) facing towards the motor body (2); the first limiting plates (21) are inserted into the second limiting grooves (712) respectively.

8. The noise reduction and shock absorption structure of claim 1, wherein said spline head between the third connecter (71) and the fourth connecter (72) is a second spline head (713) provided at one end of the third connecter (71) facing towards the fourth connecter (72); a second spline hole (731) is formed at one end of the third buffer piece (73) facing towards the third connecter (71), and a third spline head (732) is provided at another end of the third buffer piece (73) facing towards the fourth connecter (72); and the second spline hole (731) extends through an end surface of the third spline head (732); a third spline hole (722) is formed at one end of the fourth connecter (72) facing towards the third connecter (71); the second spline head (713) is sleeved by the second spline hole (731), and the third spline head (732) is sleeved by the third spline hole (722).

9. The noise reduction and shock absorption structure of claim 8, wherein a first stepped platform (733) is provided on a circumferential surface of the third buffer piece (73), the third spline head (732) protrudes from an end surface of the first stepped platform (733), and an end surface of the fourth connecter (72) abuts against the first stepped platform (733).

10. The noise reduction and shock absorption structure of claim 8, wherein a plurality of second limiting plates (714) are provided on a circumferential surface of the third connecter (71); third limiting grooves (734) corresponding to the second limiting plates (714) are formed on an end surface of the third buffer piece (73) facing towards the third connecter (71); the second limiting plates (714) are inserted into the third limiting grooves (734) respectively.

11. The noise reduction and shock absorption structure of claim 1, wherein said spline head between the fourth connecter (72) and the fixing seat (5) is a fourth spline head (723)provided at one end of the fourth connecter (72) facing towards the fixing seat (5); a fourth spline hole (741) and a fifth spline head (742) are provided at two ends of the fourth buffer piece (74) respectively; the fourth spline hole (741) extends through an end surface of the fifth spline head (742); a fifth spline hole (52) is formed at one end of the fixing seat (5) facing towards the fourth connecter (72); the fourth spline head (723) is sleeved by the fourth spline hole (741), and the fifth spline head (742) is sleeved by the fifth spline hole (52).

12. The noise reduction and shock absorption structure of claim 11, wherein a second stepped platform (724) is provided on a circumferential surface of the fourth connecter (72), and the fourth spline head (723) protrudes from an end surface of the second stepped platform (724); a third stepped platform (743) is provided on a circumferential surface of the fourth buffer piece (74), and the fifth spline head (742) protrudes from an end surface of the third stepped platform (743); an end surface of the fourth buffer piece (74) abuts against the second stepped platform (724), and an end surface of the fixing seat (5) abuts against the third stepped platform (743).

13. The noise reduction and shock absorption structure of claim 1, wherein a circumferential surface of the fixing seat (5) is sleeved with a first damping sleeve (30), and the first damping sleeve (30) is elastically fitted between the fixing seat (5) and an inner wall of the motor casing (1).

14. The noise reduction and shock absorption structure of claim 1, wherein a third damping assembly (40) is provided between a circumferential surface of the motor body (2) and an inner wall of the motor casing (1); the third damping assembly (40) comprises a sealing tube (401) sleeving around the circumferential surface of the motor body (2), and a plurality of second damping sleeves (402) sleeving around a circumferential surface of the sealing tube (401); the second damping sleeves (402) are elastically fitted between the circumferential surface of the sealing tube (401) and the inner wall of the motor casing (1).

15. The noise reduction and shock absorption structure of claim 14, wherein fourth limiting grooves (4011) accommodating the second damping sleeves (402) respectively are formed on the circumferential surface of the sealing tube (401).

16. The noise reduction and shock absorption structure of claim 14, wherein a plurality of stripes (4021) oriented along an axial direction of the tubular motor are formed on a circumferential surface of each of the second damping sleeves (402).

## Patentansprüche

1. - Geräuschreduktions- und Stoßdämpfungsstruktur für einen Rohrmotor, umfassend ein Motorgehäuse (1), einen Motorkörper (2), eine Abtriebsstütze (3), eine Abtriebswelle (4), einen Befestigungssitz (5), eine erste Dämpfungsbaugruppe (6) und eine zweite Dämpfungsbaugruppe (7) ;
der Motorkörper (2) ist innerhalb des Motorgehäuses (1) bereitgestellt; ein vorderes Ende des Motorkörpers (2) ist mit einer Antriebswelle (8) verbunden, um Bewegungen zu übertragen;
die Abtriebsstütze (3) ist an einem vorderen Ende des Motorgehäuses (1) eingebettet;
die Abtriebswelle (4) ist drehbar und verläuft durch die Abtriebsstütze (3);
der Befestigungssitz (5) ist innerhalb des Motorgehäuses (1) eingebettet;
die erste Dämpfungsbaugruppe (6) ist zwischen der Antriebswelle (8) und der Abtriebswelle (4) angeordnet; die zweite Dämpfungsbaugruppe (7) ist zwischen einem hinteren Ende des Motorkörpers (2) und dem Befestigungssitz (5) angeordnet;
die erste Dämpfungsbaugruppe (6) umfasst einen ersten Verbinder (61) und einen zweiten Verbinder (62), beide aus Metallen oder hochfesten Kunststoffen, sowie ein erstes Pufferelement (63) und ein zweites Pufferelement (64), beide aus Gummi oder Silikon; die Antriebswelle (8), der erste Verbinder (61), der zweite Verbinder (62) und die Abtriebswelle (4) sind koaxial in Reihenfolge miteinander verbunden; eine Umfangsfläche der Antriebswelle (8) ist vom ersten Pufferelement (63) ummantelt; ein Eingangsende des ersten Verbinders (61) ummantelt das erste Pufferelement (63), das zweite Pufferelement (64) ummantelt eine Umfangsfläche und eine Stirnfläche eines Ausgangsendes des ersten Verbinders (61); der zweite Verbinder (62) ummantelt das zweite Pufferelement (64);
die zweite Dämpfungsbaugruppe (7) umfasst einen dritten Verbinder (71) und einen vierten Verbinder (72), beide aus Metallen oder hochfesten Kunststoffen, sowie ein drittes Pufferelement (73) und ein viertes Pufferelement (74), beide aus Gummi oder Silikon; das hintere Ende des Motorkörpers (2), der dritte Verbinder (71), der vierte Verbinder (72) und der Befestigungssitz (5) sind koaxial in Reihenfolge miteinander verbunden;
das dritte Pufferelement (73) ummantelt einen Verzahnungskopf zwischen dem dritten Verbinder (71) und dem vierten Verbinder (72), das vierte Pufferelement (74) ummantelt einen Verzahnungskopf zwischen dem vierten Verbinder (72) und dem Befestigungssitz (5);
ein Eingangsende des ersten Verbinders (61) ist eine erste Verzahnungsbohrung (611), und die Umfangsfläche der Antriebswelle (8) ist von einem fünften Verbinder (65) aus Metallen oder hochfesten Kunststoffen ummantelt; eine Außenform des ersten Pufferelements (63) entspricht einer Form der ersten Verzahnungsbohrung (611); eine Außenform des fünften Verbinders (65) entspricht einer Form einer Innenkavität des ersten Pufferelements (63), und eine Innenkavität des fünften Verbinders (65) entspricht einer Form der Antriebswelle (8).

2. - Geräuschreduktions- und Stoßdämpfungsstruktur nach Anspruch 1, wobei ein Ausgangsende des ersten Verbinders (61) ein erster Verzahnungskopf (612) ist und eine erste Verzahnungsnut (641) entsprechend dem ersten Verzahnungskopf (612) am zweiten Pufferelement (64) ausgebildet ist.

3. - Geräuschreduktions- und Stoßdämpfungsstruktur nach Anspruch 2, wobei eine Stirnfläche des zweiten Verbinders (62), die zum ersten Verbinder (61) hin gerichtet ist, eingezogen ist, um eine zweite Verzahnungsnut (621) zu bilden; ein Ende der zweiten Verzahnungsnut (621) abgewandt vom ersten Verbinder (61) ist abgestuft, um eine Durchgangsbohrung (622) in Verbindung mit der zweiten Verzahnungsnut (621) zu bilden, durch die die Abtriebswelle (4) hindurchgeführt ist; eine Begrenzungsplatte (41) ist an einem Ende der Abtriebswelle (4) bereitgestellt, um an einer Stirnfläche des zweiten Pufferelements (64) anzuliegen; erste Begrenzungsnuten (623), auf denen die Begrenzungsplatte (41) entlang einer axialen Richtung der zweiten Verzahnungsnut (621) verschiebbar ist, sind an Seitenwänden der zweiten Verzahnungsnut (621) ausgebildet; die ersten Begrenzungsnuten (623) erstrecken sich bis zum Ende der zweiten Verzahnungsnut (621) abgewandt vom ersten Verbinder (61).

4. - Geräuschreduktions- und Stoßdämpfungsstruktur nach Anspruch 2, wobei eine Länge der ersten Verzahnungsnut (641) größer ist als eine Länge des ersten Verzahnungskopfs (612).

5. - Geräuschreduktions- und Stoßdämpfungsstruktur nach Anspruch 1, wobei in der Abtriebsstütze eine Wellenrotationsbohrung (31) ausgebildet ist, die sich entlang einer Achse der Abtriebsstütze (3) erstreckt; die Abtriebswelle (4) verläuft durch die Wellenrotationsbohrung (31) und ist innerhalb der Wellenrotationsbohrung (31) drehbar; eine Mehrzahl von Dämpfungsringen (9) ist zwischen einer Umfangsfläche der Abtriebswelle (4) und einer Innenwand der Wellenrotationsbohrung (31) angeordnet.

6. - Geräuschreduktions- und Stoßdämpfungsstruktur nach Anspruch 1, wobei an einem Ausgangsende des Motorkörpers (2) eine Drehzahlreduziereinrichtung (10) bereitgestellt ist; ein Eingangsende der Drehzahlreduziereinrichtung (10) ist mit einer rotierenden Welle des Motorkörpers (2) verbunden, um eine Bewegungsübertragung zu erreichen; ein Ausgangsende der Drehzahlreduziereinrichtung (10) ist mit der Antriebswelle (8) verbunden, um eine Bewegungsübertragung zu erreichen.

7. - Geräuschreduktions- und Stoßdämpfungsstruktur nach Anspruch 1, wobei eine Mehrzahl erster Begrenzungsplatten (21) um einen Umfangsrand einer Stirnfläche des hinteren Endes des Motorkörpers (2) bereitgestellt ist; zweite Begrenzungsnuten (712), die den ersten Begrenzungsplatten (21) entsprechen, sind umlaufend um einen Endabschnitt des dritten Verbinders (71), der zum Motorkörper (2) hin gerichtet ist, ausgebildet; die ersten Begrenzungsplatten (21) sind jeweils in die zweiten Begrenzungsnuten (712) eingesetzt.

8. - Geräuschreduktions- und Stoßdämpfungsstruktur nach Anspruch 1, wobei der genannte Verzahnungskopf zwischen dem dritten Verbinder (71) und dem vierten Verbinder (72) ein zweiter Verzahnungskopf (713) ist, der an einem Ende des dritten Verbinders (71) bereitgestellt ist, das zum vierten Verbinder (72) hin gerichtet ist; eine zweite Verzahnungsbohrung (731) ist an einem Ende des dritten Pufferelements (73) ausgebildet, das zum dritten Verbinder (71) hin gerichtet ist, und ein dritter Verzahnungskopf (732) ist an einem anderen Ende des dritten Pufferelements (73) bereitgestellt, das zum vierten Verbinder (72) hin gerichtet ist; und die zweite Verzahnungsbohrung (731) erstreckt sich durch eine Stirnfläche des dritten Verzahnungskopfs (732); eine dritte Verzahnungsbohrung (722) ist an einem Ende des vierten Verbinders (72) ausgebildet, das zum dritten Verbinder (71) hin gerichtet ist; der zweite Verzahnungskopf (713) ist von der zweiten Verzahnungsbohrung (731) ummantelt, und der dritte Verzahnungskopf (732) ist von der dritten Verzahnungsbohrung (722) ummantelt.

9. - Geräuschreduktions- und Stoßdämpfungsstruktur nach Anspruch 8, wobei eine erste abgestufte Plattform (733) auf einer Umfangsfläche des dritten Pufferelements (73) bereitgestellt ist, der dritte Verzahnungskopf (732) von einer Stirnfläche der ersten abgestuften Plattform (733) vorsteht und eine Stirnfläche des vierten Verbinders (72) an der ersten abgestuften Plattform (733) anliegt.

10. - Geräuschreduktions- und Stoßdämpfungsstruktur nach Anspruch 8, wobei eine Mehrzahl zweiter Begrenzungsplatten (714) auf einer Umfangsfläche des dritten Verbinders (71) bereitgestellt ist; dritte Begrenzungsnuten (734), die den zweiten Begrenzungsplatten (714) entsprechen, sind an einer Stirnfläche des dritten Pufferelements (73) ausgebildet, die zum dritten Verbinder (71) hin gerichtet ist; die zweiten Begrenzungsplatten (714) sind jeweils in die dritten Begrenzungsnuten (734) eingesetzt.

11. - Geräuschreduktions- und Stoßdämpfungsstruktur nach Anspruch 1, wobei der genannte Verzahnungskopf zwischen dem vierten Verbinder (72) und dem Befestigungssitz (5) ein vierter Verzahnungskopf (723) ist, der an einem Ende des vierten Verbinders (72) bereitgestellt ist, das zum Befestigungssitz (5) hin gerichtet ist; eine vierte Verzahnungsbohrung (741) und ein fünfter Verzahnungskopf (742) sind an zwei Enden des vierten Pufferelements (74) jeweils vorgesehen; die vierte Verzahnungsbohrung (741) erstreckt sich durch eine Stirnfläche des fünften Verzahnungskopfs (742); eine fünfte Verzahnungsbohrung (52) ist an einem Ende des Befestigungssitzes (5) ausgebildet, das zum vierten Verbinder (72) hin gerichtet ist; der vierte Verzahnungskopf (723) ist von der vierten Verzahnungsbohrung (741) ummantelt, und der fünfte Verzahnungskopf (742) ist von der fünften Verzahnungsbohrung (52) ummantelt.

12. - Geräuschreduktions- und Stoßdämpfungsstruktur nach Anspruch 11, wobei eine zweite abgestufte Plattform (724) auf einer Umfangsfläche des vierten Verbinders (72) bereitgestellt ist und der vierte Verzahnungskopf (723) von einer Stirnfläche der zweiten abgestuften Plattform (724) vorsteht; eine dritte abgestufte Plattform (743) ist auf einer Umfangsfläche des vierten Pufferelements (74) vorgesehen, und der fünfte Verzahnungskopf (742) steht von einer Stirnfläche der dritten abgestuften Plattform (743) vor; eine Stirnfläche des vierten Pufferelements (74) liegt an der zweiten abgestuften Plattform (724) an, und eine Stirnfläche des Befestigungssitzes (5) liegt an der dritten abgestuften Plattform (743) an.

13. - Geräuschreduktions- und Stoßdämpfungsstruktur nach Anspruch 1, wobei eine Umfangsfläche des Befestigungssitzes (5) mit einer ersten Dämpfungshülse (30) ummantelt ist und die erste Dämpfungshülse (30) elastisch zwischen dem Befestigungssitz (5) und einer Innenwand des Motorgehäuses (1) eingepasst ist.

14. - Geräuschreduktions- und Stoßdämpfungsstruktur nach Anspruch 1, wobei eine dritte Dämpfungsbaugruppe (40) zwischen einer Umfangsfläche des Motorkörpers (2) und einer Innenwand des Motorgehäuses (1) bereitgestellt ist; die dritte Dämpfungsbaugruppe (40) umfasst ein Dichtungsrohr (401), das die Umfangsfläche des Motorkörpers (2) ummantelt, und eine Mehrzahl von zweiten Dämpfungshülsen (402), die eine Umfangsfläche des Dichtungsrohrs (401) ummantelt; die zweiten Dämpfungshülsen (402) sind elastisch zwischen der Umfangsfläche des Dichtungsrohrs (401) und der Innenwand des Motorgehäuses (1) eingepasst.

15. - Geräuschreduktions- und Stoßdämpfungsstruktur nach Anspruch 14, wobei vierte Begrenzungsnuten (4011), die die zweiten Dämpfungshülsen (402) jeweils aufnehmen, auf der Umfangsfläche des Dichtungsrohrs (401) ausgebildet sind.

16. - Geräuschreduktions- und Stoßdämpfungsstruktur nach Anspruch 14, wobei eine Mehrzahl von Streifen (4021), die entlang einer axialen Richtung des Rohrmotors ausgerichtet ist, auf einer Umfangsfläche jeder der zweiten Dämpfungshülsen (402) ausgebildet ist.

## Revendications

1. - Structure de réduction de bruit et d'absorption de chocs pour un moteur tubulaire, comprenant un carter de moteur (1), un corps de moteur (2), un support de sortie (3), un arbre de sortie (4), un siège de fixation (5), un premier ensemble d'amortissement (6) et un deuxième ensemble d'amortissement (7) ;
le corps de moteur (2) est disposé à l'intérieur du carter de moteur (1) ; une extrémité avant du corps de moteur (2) est reliée à un arbre de transmission (8) pour transmettre des mouvements ;
le support de sortie (3) est encastré à une extrémité avant du carter de moteur (1) ;
l'arbre de sortie (4) est apte à tourner et passe à travers le support de sortie (3) ;
le siège de fixation (5) est encastré à l'intérieur du carter de moteur (1) ;
le premier ensemble d'amortissement (6) est disposé entre l'arbre de transmission (8) et l'arbre de sortie (4) ; le deuxième ensemble d'amortissement (7) est disposé entre une extrémité arrière du corps de moteur (2) et le siège de fixation (5) ;
le premier ensemble d'amortissement (6) comprend un premier connecteur (61) et un deuxième connecteur (62) tous deux faits de métal ou de matière plastique à haute résistance, et une première pièce tampon (63) et une deuxième pièce tampon (64) toutes deux faites de caoutchouc ou de silicone ; l'arbre de transmission (8), le premier connecteur (61), le deuxième connecteur (62) et l'arbre de sortie (4) sont reliés coaxialement en séquence ; une surface circonférentielle de l'arbre de transmission (8) est emmanchée dans la première pièce tampon (63) ; une extrémité d'entrée du premier connecteur (61) est emmanchée sur la première pièce tampon (63), la deuxième pièce tampon (64) est emmanchée sur une surface circonférentielle et une surface d'extrémité d'une extrémité de sortie du premier connecteur (61) ; le deuxième connecteur (62) est emmanché sur la deuxième pièce tampon (64) ;
le deuxième ensemble d'amortissement (7) comprend un troisième connecteur (71) et un quatrième connecteur (72) tous deux faits de métal ou de matière plastique à haute résistance, et une troisième pièce tampon (73) et une quatrième pièce tampon (74) toutes deux faites de caoutchouc ou de silicone ; l'extrémité arrière du corps de moteur (2), le troisième connecteur (71), le quatrième connecteur (72) et le siège de fixation (5) sont reliés coaxialement en séquence ; la troisième pièce tampon (73) est emmanchée sur une tête cannelée entre le troisième connecteur (71) et le quatrième connecteur (72), une quatrième pièce tampon (74) est emmanchée sur une tête cannelée entre le quatrième connecteur (72) et le siège de fixation (5) ;
une extrémité d'entrée du premier connecteur (61) est un premier trou cannelé (611), et la surface circonférentielle de l'arbre de transmission (8) est emmanchée dans un cinquième connecteur (65) fait de métal ou de matière plastique à haute résistance ; une forme extérieure de la première pièce tampon (63) correspond à une forme du premier trou cannelé (611) ; une forme extérieure du cinquième connecteur (65) correspond à une forme d'une cavité intérieure de la première pièce tampon (63), et une cavité intérieure du cinquième connecteur (65) correspond à une forme de l'arbre de transmission (8).

2. - Structure de réduction de bruit et d'absorption de chocs selon la revendication 1, dans laquelle une extrémité de sortie du premier connecteur (61) est une première tête cannelée (612), et une première rainure de cannelure (641) correspondant à la première tête cannelée (612) est formée sur la deuxième pièce tampon (64).

3. - Structure de réduction de bruit et d'absorption de chocs selon la revendication 2, dans laquelle une surface d'extrémité du deuxième connecteur (62) faisant face au premier connecteur (61) est évidée pour former une seconde rainure de cannelure (621) ; une extrémité de la seconde rainure de cannelure (621) à distance du premier connecteur (61) est étagée pour former un trou traversant (622) en communication avec la seconde rainure de cannelure (621) pour que l'arbre de sortie (4) passe à travers ; une plaque de limitation (41) est disposée à une extrémité de l'arbre de sortie (4) pour venir en butée contre une surface d'extrémité de la deuxième pièce tampon (64) ; des premières rainures de limitation (623) sur lesquelles la plaque de limitation (41) est apte à coulisser le long d'une direction axiale de la seconde rainure de cannelure (621) sont formées sur des parois latérales de la seconde rainure de cannelure (621) ; les premières rainures de limitation (623) s'étendent jusqu'à l'extrémité de la seconde rainure de cannelure (621) à distance du premier connecteur (61).

4. - Structure de réduction de bruit et d'absorption de chocs selon la revendication 2, dans laquelle une longueur de la première rainure de cannelure (641) est supérieure à une longueur de la première tête cannelée (612).

5. - Structure de réduction de bruit et d'absorption de chocs selon la revendication 1, dans laquelle un trou de rotation d'arbre (31) est formé dans le support de sortie, s'étendant le long d'un axe du support de sortie (3) ; l'arbre de sortie (4) passe à travers le trou de rotation d'arbre (31) et est apte à tourner à l'intérieur du trou de rotation d'arbre (31) ; une pluralité de bagues d'amortissement (9) sont disposées entre une surface circonférentielle de l'arbre de sortie (4) et une paroi intérieure du trou de rotation d'arbre (31).

6. - Structure de réduction de bruit et d'absorption de chocs selon la revendication 1, dans laquelle un dispositif de réduction de vitesse (10) est disposé sur une extrémité de sortie du corps de moteur (2) ; une extrémité d'entrée du dispositif de réduction de vitesse (10) est reliée à un arbre rotatif du corps de moteur (2) pour réaliser une transmission de mouvement ; une extrémité de sortie du dispositif de réduction de vitesse (10) est reliée à l'arbre de transmission (8) pour réaliser une transmission de mouvement.

7. - Structure de réduction de bruit et d'absorption de chocs selon la revendication 1, dans laquelle une pluralité de premières plaques de limitation (21) sont disposées autour d'un bord périphérique d'une surface d'extrémité de l'extrémité arrière du corps de moteur (2) ; des deuxièmes rainures de limitation (712) correspondant aux premières plaques de limitation (21) sont formées de manière circonférentielle autour d'une partie d'extrémité du troisième connecteur (71) faisant face au corps de moteur (2) ; les premières plaques de limitation (21) sont introduites dans les deuxièmes rainures de limitation (712), respectivement.

8. - Structure de réduction de bruit et d'absorption de chocs selon la revendication 1, dans laquelle ladite tête cannelée entre le troisième connecteur (71) et le quatrième connecteur (72) est une deuxième tête cannelée (713) disposée à une extrémité du troisième connecteur (71) faisant face au quatrième connecteur (72) ; un deuxième trou cannelé (713) est formé à une extrémité de la troisième pièce tampon (73) faisant face au troisième connecteur (71), et une troisième tête cannelée (732) est disposée à une autre extrémité de la troisième pièce tampon (73) faisant face au quatrième connecteur (72) ; et le deuxième trou cannelé (731) s'étend à travers une surface d'extrémité de la troisième tête cannelée (732) ; un troisième trou cannelé (722) est formé à une extrémité du quatrième connecteur (72) faisant face au troisième connecteur (71) ; la deuxième tête cannelée (713) est emmanchée dans le deuxième trou cannelé (731), et la troisième tête cannelée (732) est emmanchée dans le troisième trou cannelé (722).

9. - Structure de réduction de bruit et d'absorption de chocs selon la revendication 8, dans laquelle une première plate-forme étagée (733) est disposée sur une surface circonférentielle de la troisième pièce tampon (73), la troisième tête cannelée (732) fait saillie à partir d'une surface d'extrémité de la première plate-forme étagée (733), et une surface d'extrémité du quatrième connecteur (72) vient en butée contre la première plate-forme étagée (733).

10. - Structure de réduction de bruit et d'absorption de chocs selon la revendication 8, dans laquelle une pluralité de secondes plaques de limitation (714) sont disposées sur une surface circonférentielle du troisième connecteur (71) ; des troisièmes rainures de limitation (734) correspondant aux secondes plaques de limitation (714) sont formées sur une surface d'extrémité de la troisième pièce tampon (73) faisant face au troisième connecteur (71) ; les secondes plaques de limitation (714) sont introduites dans les troisièmes rainures de limitation (734), respectivement.

11. - Structure de réduction de bruit et d'absorption de chocs selon la revendication 1, dans laquelle ladite tête cannelée entre le quatrième connecteur (72) et le siège de fixation (5) est une quatrième tête cannelée (723) disposée à une extrémité du quatrième connecteur (72) faisant face au siège de fixation (5) ; un quatrième trou cannelé (741) et une cinquième tête cannelée (742) sont disposé à deux extrémités de la quatrième pièce tampon (74), respectivement ; le quatrième trou cannelé (741) s'étend à travers une surface d'extrémité de la cinquième tête cannelée (742) ; un cinquième trou cannelé (52) est formé à une extrémité du siège de fixation (5) faisant face au quatrième connecteur (72) ; la quatrième tête cannelée (723) est emmanchée dans le quatrième trou cannelé (741), et la cinquième tête cannelée (742) est emmanchée dans le cinquième trou cannelé (52).

12. - Structure de réduction de bruit et d'absorption de chocs selon la revendication 11, dans laquelle une deuxième plate-forme étagée (724) est disposée sur une surface circonférentielle du quatrième connecteur (72), et la quatrième tête cannelée (723) fait saillie à partir d'une surface d'extrémité de la deuxième plate-forme étagée (724) ; une troisième plate-forme étagée (743) est disposée sur une surface circonférentielle de la quatrième pièce tampon (74), et la cinquième tête cannelée (742) fait saillie à partir d'une surface d'extrémité de la troisième plate-forme étagée (743) ; une surface d'extrémité de la quatrième pièce tampon (74) vient en butée contre la deuxième plate-forme étagée (724), et une surface d'extrémité du siège de fixation (5) vient en butée contre la troisième plate-forme étagée (743).

13. - Structure de réduction de bruit et d'absorption de chocs selon la revendication 1, dans laquelle une surface circonférentielle du siège de fixation (5) est emmanchée dans un premier manchon d'amortissement (30), et le premier manchon d'amortissement (30) est monté élastiquement entre le siège de fixation (5) et une paroi intérieure du carter de moteur (1).

14. - Structure de réduction de bruit et d'absorption de chocs selon la revendication 1, dans laquelle un troisième ensemble d'amortissement (40) est disposé entre une surface circonférentielle du corps de moteur (2) et une paroi intérieure du carter de moteur (1) ; le troisième ensemble d'amortissement (40) comprend un tube d'étanchéité (401) emmanché autour de la surface circonférentielle du corps de moteur (2), et une pluralité de seconds manchons d'amortissement (402) emmanchés autour d'une surface circonférentielle du tube d'étanchéité (401) ; les seconds manchons d'amortissement (402) sont montés élastiquement entre la surface circonférentielle du tube d'étanchéité (401) et la paroi intérieure du carter de moteur (1).

15. - Structure de réduction de bruit et d'absorption de chocs selon la revendication 14, dans laquelle des quatrièmes rainures de limitation (4011) recevant respectivement les seconds manchons d'amortissement (402) sont formées sur la surface circonférentielle du tube d'étanchéité (401).

16. - Structure de réduction de bruit et d'absorption de chocs selon la revendication 14, dans laquelle une pluralité de bandes (4021) orientées le long d'une direction axiale du moteur tubulaire sont formées sur une surface circonférentielle de chacun des seconds manchons d'amortissement (402).
